# EUROPEAN PATENT APPLICATION

(11) **EP 1 482 341 A1**
(43) Date of publication of application: **01.12.2004**
(21) Application number: 03291246.1
(22) Date of filing: 26.05.2003
(51) Int. Cl.: G02B 6/44

(54) **Compact optical microcable**

(71) Applicant: ALCATEL, 75008 Paris (FR)
(72) Inventor: Weiss, Alexander, Dr., 41179 Mönchengladbach (DE); Nothofer, Klaus, 40699 Erkrath (DE); Lausch, Peter, 47803 Krefeld (DE)
(74) Representative: Dohmen, Johannes Maria Gerardus

(57) **Abstract**

A microcable 3 for installation in small microducts 2 which comprises a single buffer tube 4 holding a plurality of optical fibers 5, a layer of strenght elements 6 stranded around the buffer tube bonded together and covered by a thin layer of adhesive 7, and an outermost common cable jacket 8.

## Description

The invention relates to the field of optical fiber cables and more specifically to an optical fiber cable especially suited for blown installation in microducts of small diameter.

Fiber optic cables have been commonly deployed by installing them in ducts either by blowing or pulling, burying them in the ground, or suspending them between above-ground poles. Traditional duct installation is inefficient in utilizing space tough, typically one cable per inner duct has been the maximum capacity, and in some cases two cables have been pulled- or jetted-in. Recently developed optical micro cabling technology has been introduced for the deployment of fiber optic cables to increase utilization of the conduit space and enhance profitability of the current or future telecommunications infrastructure. This technology involves the use of standard inner ducts in which microducts are jetted, then followed by the jetting of microduct cables or microcables into the microducts when required. Although originally intended for business access networks (FTTB) and fiber-to-the-home (FTTH), it has been used successfully in long-haul applications as well.

Microducts are empty tubes of small outer/inner diameter, generally in the range of 5/3.5 mm - 12/10 mm which can be blown into empty or partially filled standard ducts. Microduct cables or microcables, specially designed for this kind of applications are then installed, when and as needed, inside said microduct tubes by means of blown installation techniques.

There are a variety of microduct cables on the market with variable external diameters suited for different microduct inner diameter dimensions and holding a plurality of optical fibers inside. In US Pat. 2002/0061231, for example, a microcable comprising a metal or plastic tube of very small diameter (preferably 3.5 to 5.5 mm) coated with a plastic layer e.g. PTFE, is described. The optical waveguides are then introduced into the tube either after the empty tube has been laid or at the factory.

Another known steel tube designs used by a micro technology optical fiber deployment company allow up to 72 fibers in a small 5.5 mm package and fits into a 10/8 mm microduct. There exist also the so-called blown fiber bundles or fiber ribbons consisting of fiber bundles which are embedded in a common soft matrix material. The latter though are no real cables, and are not suited for outside plant applications as they are not robust and thus sensitive to mechanical damage when installed in outdoor environment.

The object of the present invention is to develop a microcable suitable for blown installation in small microducts. The cable shall allow high fiber count, blowing performance and be mechanically robust enough to be safely installed in an outside plant environment.

This object is achieved according to the invention by a microcable for installation in small microducts which comprises a single buffer tube holding a plurality of optical fibers, a layer of strength elements stranded around the buffer tube which are bonded together and covered by a thin layer of adhesive, and an outermost common cable jacket.

Advantageous configurations of the invention emerge from the dependent claims, the following description and the drawings.

A cable of the characteristics described in the present invention also complies with all major outdoor cable requirements: not sensitive to mechanical damage, high tensile strength, crush resistance and able to work in an operation temperature range from -30°C to +60°C. Another advantage is that it is easy to handle by normal skilled installation personnel.

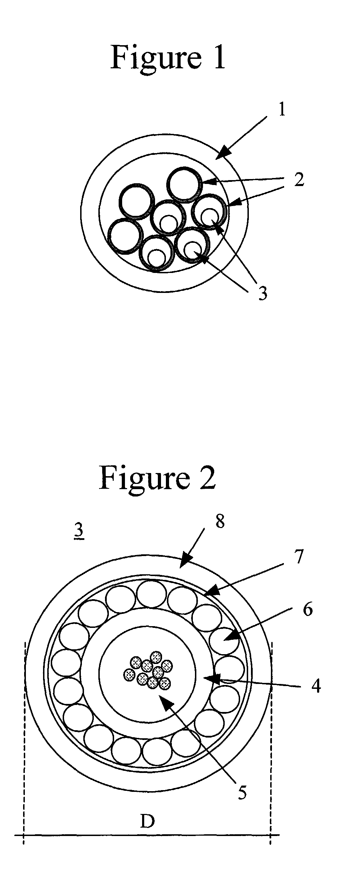

An embodiment of the invention is now explained with the aid of Figures 1 and 2.

Fig. 1 shows a cross-sectional view of an optical micro cabling deployment example.

Fig. 2 shows a cross-sectional view of a microcable according to the invention.

Figure 1 shows an example of the micro cabling technology for the deployment of optical fiber cables. The configuration in the figure shows a duct 1 in which six microducts 2 have been placed and four of said microducts have a microcable 3 inside.

Figure 2 shows a microcable 3 according to the invention. It comprises a single buffer tube 4 holding a plurality of optical fibers 5, a layer of strength elements 6 stranded around the buffer tube 4 bonded together and covered by a thin layer of adhesive 7, and an outer jacket 8.

The outermost jacket 8 of the microcable 3 is made preferably of thermoplastic material, such as polyethylene or polyamide. For in-house applications, the jacket can also be made of Zero Halogen Flame Retardant materials. But other jacket materials such as fluorinated polymers, e.g. PTFE, PVDF can also be used.

The strength elements 6 can be glass yarns or fibers which are bonded together and attached to the outer jacket 8 by a thin layer of adhesive 7 such as a Hot Melt adhesive. The thin layer of adhesive 7 applied over the strength elements 6 bonds them together but keeps them flexible enough to avoid a high cable stiffness. The circular application of the strength elements 6 together with the adhesive 7 film bonding the jacket 8 to it provides a very high level of mechanical strength both in the radial and axial direction of the cable.

The microcable 3 may further contain water swellable elements so as to ensure longitudinal water blocking in the strength elements 6 layer.

The buffer tube 4 is made preferably of a thermoplastic material and is generally filled with a water repelling gel. It has a relative big diameter in comparison to the whole cable cross-section, which allows it to house a high optical fiber 5 count.

The microcable 3 is also characterized by having an outer diameter D in millimeters which is not greater than the square root of 0.61 times the number of optical fibers 5 inside the cable. For example, for a microcable 3 having 24 optical fibers inside, the outer diameter D does not exceed 3.8 mm and for a microcable 3 having 12 fibers inside, the outer diameter D does not exceed 2.7 mm.

The optical fibers 5 used are preferably standard singlemode or multimode optical fibers with a nominal diameter of 250 µm.

A microcable 3 designed according to the invention presents the advantages that it allows to obtain a cable with an extremely small outer diameter D specially suited for installation in small microducts 2, and includes at the same time rigid strength members and is flexible enough to be easily blown in microducts in outside cable plants. It further allows operation at low temperatures and provides high protection of the fibers against mechanical damage, microbending and water.

## Claims

1. A microcable (3) for installation in small microducts (2) **characterized in that** it comprises a single buffer tube (4) holding a plurality of optical fibers (5), a layer of strength elements (6) stranded around the buffer tube which are bonded together and covered by a thin layer of adhesive (7), and an outermost common cable jacket (8) .

2. The microcable of claim 1 **characterized in that** it has a outer diameter (D) in millimeters which is not greater than the square root of 0.61 times the number of optical fibers (5) inside the cable.

3. The microcable of claim 1 **characterized in that** the jacket (8) is made of Zero Halogen Flame retardant materials.

4. The microcable of claim 1 **characterized in that** the jacket (8) is made of fluorinated polymers.

5. The microcable of claim 1 **characterized in that** the buffer tube (4) is made of thermoplastic material.

6. The microcable of claim 1 **characterized in that** the buffer tube (4) is filled with a water repelling gel.

7. The microcable of claim 1 **characterized in that** it contains water swellable elements so as to ensure longitudinal water blocking in the strength elements (6) layer.

8. The microcable of claim 1 **characterized in that** the strength elements (6) are made of fiber glass.
